# EUROPEAN PATENT APPLICATION

(11) **EP 1 526 394 A1**
(43) Date of publication of application: **27.04.2005**
(21) Application number: 03741128.7
(22) Date of filing: 27.06.2003
(51) Int. Cl.: G02B 6/10, G02B 6/26

(54) **OPTICAL FIBER COMPONENT**

(30) Priority: 29.07.2002 JP 2002219701
(71) Applicant: Showa Electric Wire and Cable Co.,Ltd., Kawasaki-shi, Kanagawa 210-0843 (JP)
(72) Inventor: FUJITA, Jin c/o Showa Electric Wire & Cable Co.Ltd, Kawasaki-shi, Kanagawa 210-0843 (JP); OTO, Masanori Showa Electric Wire & Cable Co.Ltd, Kawasaki-shi, Kanagawa 210-0843 (JP); MORISHITA, Yuichi Showa Electric Wire&Cable Co.Ltd, Kawasaki-shi, Kanagawa 210-0843 (JP)
(74) Representative: Glawe, Delfs, Moll & Partner
(86) International application number: PCT/JP2003/008203
(87) International publication number: WO 2004/011973

(57) **Abstract**

An optical fiber component comprises an optical element (1), a pair of PhC fibers (2a, 2b) with a large MFD (approximately 30 to 50 µm), and a pair of SM fibers (3a, 3b) with a small MFD (approximately 10 µm). The pair of the PhC fibers (2a, 2b) has cores (21a, 21b) for transmitting light and clads (22a, 22b) provided on the outer periphery of the cores (21a, 21b) . An output end of a first PhC fiber (2a) is optically connected to a light incident end-face (1a) of the optical element (1) with the first PhC fiber output-end aligned with the optical axis of the optical element (1) . An input end of a second PhC fiber (2b) is optically connected to a light exit end-face (1b) with the second Phc fiber input end aligned with the optical axis of the optical element (1). An output end of a first SM fiber (3a) is optically connected to the input end of the first PhC fiber (2a) with the first SM fiber output-end aligned with the optical axis of the first PhC fiber. An input end of a second SM fiber (3b) is optically connected to an output end of the second PhC fiber with the second SM fiber input-end aligned with the optical axis of the first PhC fiber.

## Description

### Technical Field

This invention relates to an optical fiber component and, more particularly, to an optical fiber component which is employed at such an optical coupling portion as located between optical fibers and an optical element composing an optical telecommunication system.

### Background Art

Generally, the optical telecommunication system comprises optical fibers and bulk type optical devices (e.g., an optical isolator or an optical switch). These optical fibers and bulk type optical devices are constructed such that the light emanating from an optical fiber is incident on the bulk type optical device and such that the light emanating from the bulk type device is incident again on the optical fiber.

Here, the light emanating from the optical fiber is generally collimated by a lens, and the light emanating from the bulk type device is condensed again by the lens to go into the core region of optical fiber.

However, in case a single mode fiber (as will be shortly called the "SM fiber") with a small core diameter to align the SM fiber and the bulk type optical device uses the lens contained problems. Because, these alignment is complicated and spent much time. Thus, it raises the cost.

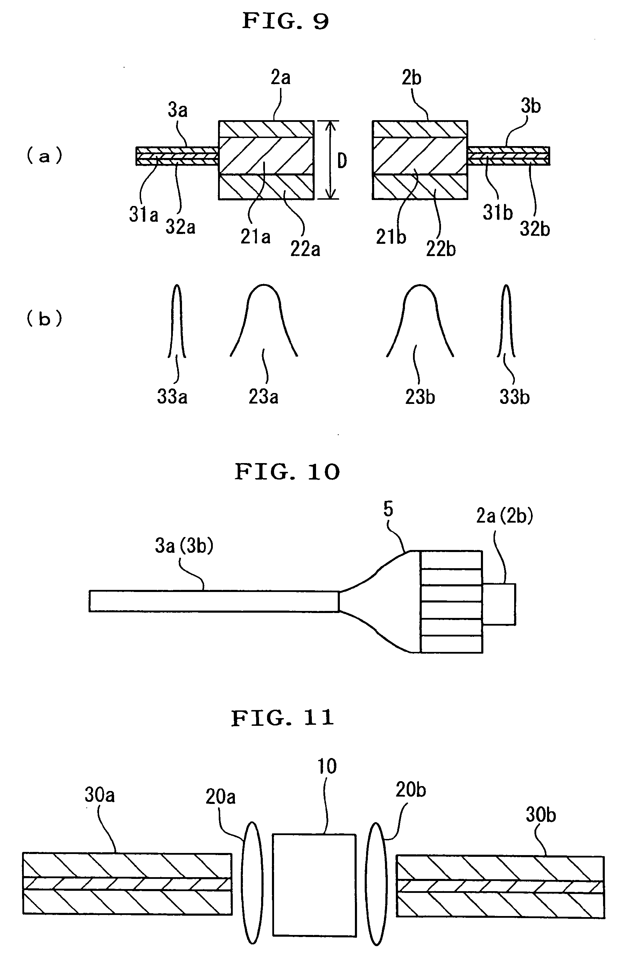

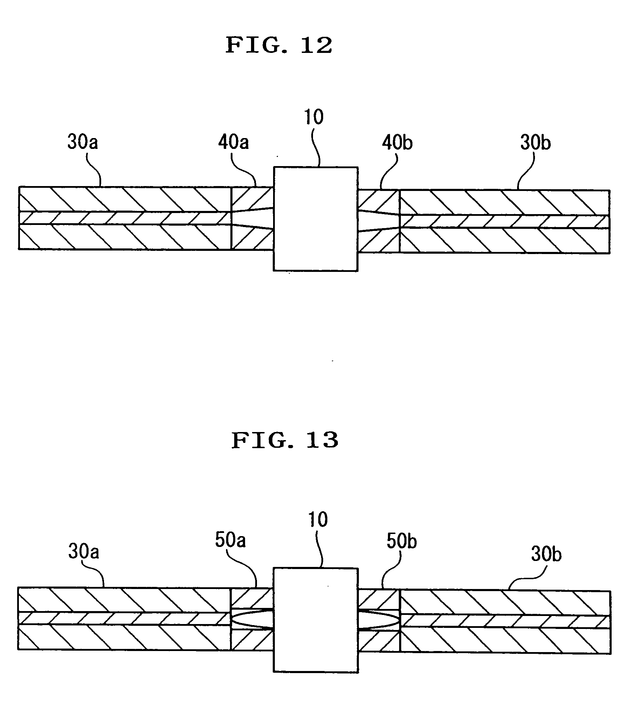

Thus, there have been proposed: (A) the so-called "GRIN lens system" (as referred to JP-A-2001-75026 or JP-A-11-52293), in which a pair of GRIN lenses (Gradient Index Lenses) 20a and 20b are arranged on the two ends of a bulk type optical device 10 and in which a pair of SM fibers 30a and 30b are arranged on the two sides of those GRIN lenses 20a and 20b, as shown in Fig. 11; (B) the so-called "TEC system" (as referred to JP-A-63-33706), in which a pair of fibers (as will be shortly called the "TEC fibers") subjected to the TEC (Thermal Expanded Core) treatment are optically connected at their individual one-side end faces to the two ends of the bulk type optical device 10 and in which the SM fibers 30a and 30b are optically connected individually to the other end faces of the pair of TEC fibers 40a and 40b, as shown in Fig. 12; and (C) the so-called "GIF system") (as referred to J. LIGHTWAVE TECHNOLOGY VOL. LT.5, NO. 9, 1987 and J. LIGHTWAVE TECHNOLOGY VOL. 20, NO. 5, 2002), in which one-side end faces of a pair of graded index fibers (as will be shortly called the "GI fiber") 50a and 50b are connected to the two ends of the bulk type optical device 10 and in which the SM fibers 30a and 30b are optically connected individually to the other end faces of the pair of GI fibers 50a and 50b, as shown in Fig. 13.

In the GRIN lens system (A), on the other hand, the optical connection to the optical device is made in the single mode so that the connection loss is low and so that the components are inexpensive. However, the GRIN lens system (A) has such a complicated construction as to increase the steps needed for the alignment thereby to raise the cost as a whole. In the TEC system (B), on the other hand, the core can be expanded in the single mode so that the radiation loss at the TEC fiber portion can be reduced to expand the mode field diameter (as will be shortly called the "MFD") with a low loss, and the optical connection to the optical device is maintained at low loss with the single mode propagation. However, the TEC system (B) uses expensive components and takes a long time for the TEC working, and finds it difficult to adjust the length of the TEC fiber portion. On the other hand, the GIF system (C) can use inexpensive components and can adjust the size of the MFD and the length of the GI fiber according to the GI fiber manufacturing conditions such as the specific refractive index difference or the core diameter. However, in the GIF system (C), it is difficult to align between the optical device and the optical fiber using GIF with the single mode propagation . For a collimated light, moreover, it is necessary to adjust the length of the GI fiber. This adjustment of the GI fiber is delicate and difficult for sufficient collimation. Another problem is that the connection loss increases between the SM fiber and the GI fiber owing to be increasing the difference from the quarter pitch length of GIF.

The present invention has been conceived to solve the above-specified difficulties, and has an object to provide an optical fiber component which can be optically connected to the optical element in the single mode with a low connection loss by using a photonic crystal fiber (as will be shortly called the "PhC fiber").

### Disclosure of the Invention

In order to achieve that object, according to the present invention, there is provided an optical fiber component comprising: an optical element having a light incident end face on its one side and a light exit end face on its other side; a pair of PhC fibers having their individual one-side end faces optically connected to the two end faces of the optical element; and a pair of SM fibers having their individual one-side end faces optically connected to the other end faces of the pair of PhC fibers. The pair of PhC fibers has a MFD made larger than that of the pair of SM fibers.

According to the present invention, there is also provided an optical fiber component comprising: an optical element having a light incident end face on its one side and a light exit end face on its other side; a pair of PhC fibers having their individual one-side end faces optically connected to the two end faces of the optical element; a pair of collimation lenses having their individual one-side faces optically connected to the other end faces of the pair of PhC fibers; and a pair of SM fibers having their individual one-side end faces optically connected to the other end faces of the pair of collimation lenses. The pair of PhC fibers has a MFD made larger than that of the pair of SM fibers; and in that the pair of collimation lenses has a MFD gradually enlarged from the SM fibers to the PhC fibers.

In the optical fiber component of the invention, moreover, the optical element is made of an optical isolator, an optical filter, an optical switch or an optical variable attenuator, or a combination thereof.

According to the present invention, there is further provided an optical fiber component comprising: a SM fiber; and a PhC fiber having an end face optically connected to an end face of the SM fiber and having a MFD larger than that of the SM fiber. The external diameter of the PhC fiber can be made substantially equal to a ferrule making an optical connector.

According to the present invention, there is further provided an optical fiber component comprising: a SM fiber; a collimation lens having an end face optically connected to an end face of the SM fiber and having a MFD gradually enlarged; and a PhC fiber having an end face optically connected to the other end face of the collimation lens and having a MFD larger than that of the SM fiber. The external diameter of the PhC fiber can be made substantially equal to a ferrule making an optical connector.

In the optical fiber component of the present invention, moreover, the collimation lens can be a GI fiber.

In the optical fiber component of the present invention, the GI fiber can have an end face fused to the end face of the GI fiber.

In the optical fiber component of the present invention, moreover, a connector housing can be attached to the leading end portion of the PhC fiber.

In the optical fiber component of the present invention, moreover, the PhC fiber has a MFD of at least 20 µm.

According to the present invention, the optical fiber component can be optically connected to the optical element in the single mode by using the PhC fiber so that the connection loss can be reduced. According to the PhC fiber, moreover, the size of the MFD can be freely designed to expand the core in the single mode and to perform the optical coupling easily according to the design of the optical element. By enlarging the MFD of the PhC fibers, still moreover, the angle of diffraction of the light to propagate can be decreased to reduce the connection loss at the time when the PhC fibers are coupled to the optical element.

### Brief Description of the Drawings

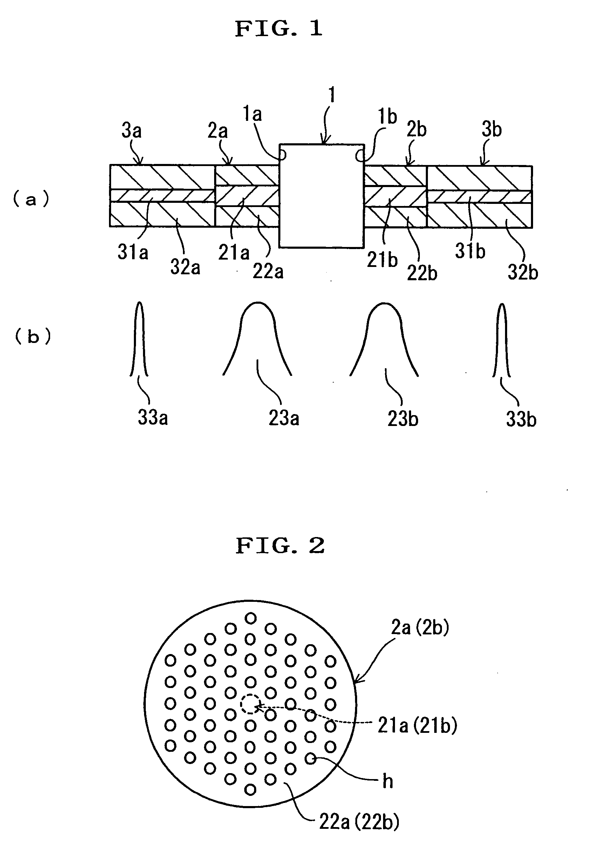

In Fig. 1 presenting explanatory diagrams of a first embodiment of an optical fiber component of the invention, Fig. 1 (a) is a longitudinal section of a portion of the same optical fiber component, and Fig. 1(b) is an explanatory diagram of waveforms to propagate through the same optical fiber component.

Fig. 2 is a transverse section of a PhC fiber in the optical fiber component of the invention.

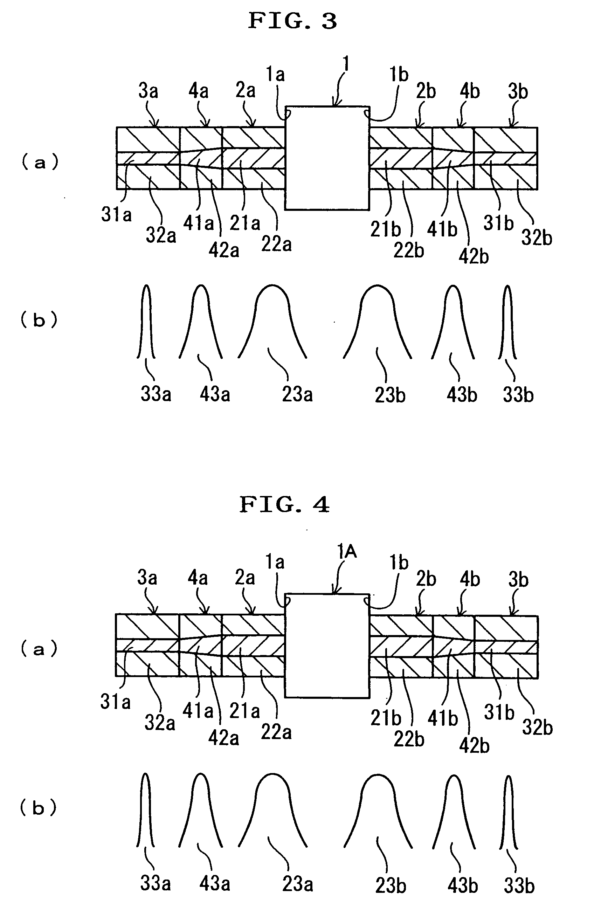

In Fig. 3 presenting explanatory diagrams of a second embodiment of the optical fiber component of the invention, Fig. 3(a) is a longitudinal section of a portion of the same optical fiber component, and Fig. 3 (b) is an explanatory diagram of waveforms to propagate through the same optical fiber component.

In Fig. 4 presenting explanatory diagrams of a third embodiment of the optical fiber component of the invention, Fig. 4(a) is a longitudinal section of a portion of the same optical fiber component, and Fig. 4 (b) is an explanatory diagram of waveforms to propagate through the same optical fiber component.

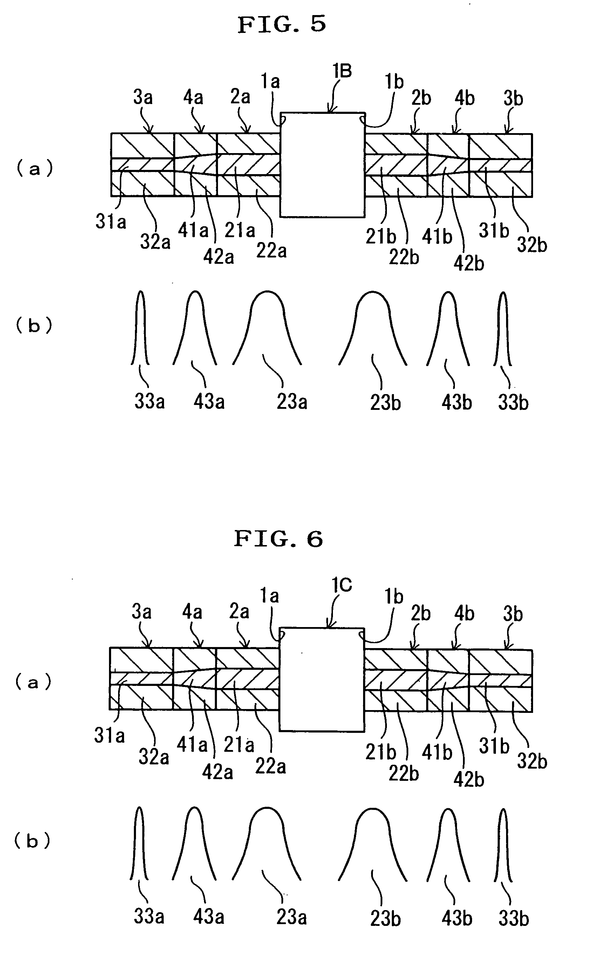

In Fig. 5 presenting explanatory diagrams of a fourth embodiment of the optical fiber component of the invention, Fig. 5(a) is a longitudinal section of a portion of the same optical fiber component, and Fig. 5(b) is an explanatory diagram of waveforms to propagate through the same optical fiber component.

In Fig. 6 presenting explanatory diagrams of a fifth embodiment of the optical fiber component of the invention, Fig. 6(a) is a longitudinal section of a portion of the same optical fiber component, and Fig. 6 (b) is an explanatory diagram of waveforms to propagate through the same optical fiber component.

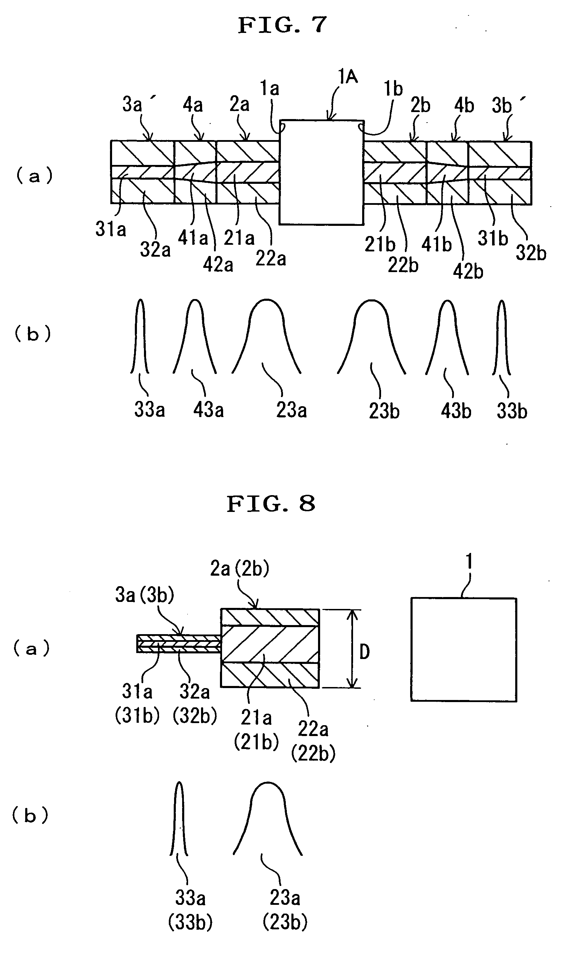

In Fig. 7 presenting explanatory diagrams of a sixth embodiment of the optical fiber component of the invention, Fig. 7(a) is a longitudinal section of a portion of the same optical fiber component, and Fig. 7(b) is an explanatory diagram of waveforms to propagate through the same optical fiber component.

In Fig. 8 presenting explanatory diagrams of a seventh embodiment of the optical fiber component of the invention, Fig. 8(a) is a longitudinal section of a portion of the same optical fiber component, and Fig. 8(b) is an explanatory diagram of waveforms to propagate through the same optical fiber component.

In Fig. 9 presenting explanatory diagrams of an eighth embodiment of the optical fiber component of the invention, Fig. 9(a) is a longitudinal section of a portion of the same optical fiber component, and Fig. 9(b) is an explanatory diagram of waveforms to propagate through the same optical fiber component.

Fig. 10 is a top plan view showing a ninth embodiment of the optical fiber component of the invention.

Fig. 11 is a longitudinal section of a portion of an optical fiber component of the prior art.

Fig. 12 is a longitudinal section of a portion of an optical fiber component of the prior art.

Fig. 13 is a longitudinal section of a portion of an optical fiber component of the prior art.

### Best Mode for Carrying Out the Invention

Modes of preferred embodiments, to which the optical fiber component of the invention is applied, will be described with reference to the accompanying drawings.

Fig. 1 is a longitudinal section of a portion of an optical fiber component according to a first embodiment of the invention, and Fig. 2 is a transverse section of a PhC fiber.

In Fig. 1, the optical fiber component of the invention comprises: an optical element 1 made of an optical isolator, an optical filter, an optical switch or an optical variable attenuator, or their combination; a pair of PhC fibers 2a and 2b with a large MFD (approximately 30 to 50 µm); and a pair of SM fibers 3a and 3b with a small MFD (approximately 10 µm). The optical element 1 is provided with a light incident end face 1a on its one side and a light exit end face 1b on its other side. The pair of the PhC fibers 2a and 2b has cores 21a and 21b for propagated light and clads 22a and 22b disposed on the outer peripheries of the cores 21a and 21b. Likewise, the pair of SM fibers 3a and 3b has cores 31a and 31b and clads 32a and 32b disposed on the outer peripheries of the cores 31a and 31b.

Here, the PhC fiber 2a or 2b is constructed, as shown in Fig. 2, by drawing a preformed rod, which is regularly formed by binding a number of glass tubes corresponding to the clad 22a or 22b, in a fibrous shape around a glass rod of quartz or the like corresponding to the core 21a or 21b. The core 21a or 21b of the PhC fiber 2a or 2b is formed to have a circular or polygonal (or hexagonal) shape.

This PhC fiber 2a or 2b is characterized in that it is enabled to design a larger effective refractive index difference and a larger core diameter than those of the SM fiber in general use, by adjusting the hole diameter or hole distance of a glass tube corresponding to the clad 22a or 22b. The PhC fiber 2a or 2b is further characterized in that it can realize a large MFD in a single mode in accordance with the wavelength used.

Next, an end face (or output end) of the PhC fiber 2a (as will be called the "first PhC fiber 2a") on the lefthand side of Fig. 1 is optically connected to the light incident end face 1a of the optical element 1 while being aligned with the optical axis of the optical element 1. An end face (or input end) of the PhC fiber 2b (as will be called the "second PhC fiber 2b") on the righthand side of Fig. 1 is optically connected to the light exit end face 1b while being aligned with the optical axis of the optical element 1. Moreover, an end face (or output end) of the SM fiber 3a (as will be called the "first SM fiber 3a") on the lefthand side of Fig. 1 is optically connected to the other end face (or input end) of the first PhC fiber 2a while being aligned with the optical axis of the first PhC fiber. An end face (or input end) of the SM fiber 3b (as will be called the second SM fiber 3b") on the righthand side of Fig. 1 is optically connected to the other end face (or output end) of the second PhC fiber while being aligned with the optical axis of the second PhC fiber 2b. Here, the first and second PhC fibers 2a and 2b and the first and second SM fibers 3a and 3b can be spliced to each other by heating the mirror-worked end faces of the two with a burner or an arc discharge. Moreover, the output end of the first PhC fiber 2a and the optical element 1, and the input end of the second PhC fiber 2a and the optical element 1 can be optically connected to each other by applying an optical adhesive or matching oil.

In the optical fiber component thus constructed, as shown in Fig. 1(b), the light incident from the input end of the first SM fiber 3a propagates in a waveform 33a with a small MFD through the first SM fiber 3a and emanates from the output end of the first SM fiber 3a. On the other hand, the light emitted from the first SM fiber 3a is incident on the input end of the first PhC fiber 2a and is enlarged to a large waveform 23a in the first PhC fiber 2a. This large waveform 23a propagates in the single mode through the first PhC fiber 2a and is incident on the light incident end face 1a of the optical element 1. The light having passed through the optical element 1 and emitted from the light exit end face 1b of the optical element 1 is incident on the input end of the second PhC fiber 2b. This light propagates through the second PhC fiber 2b in a waveform 23b with a large MFD and in the single mode and emanates from the output end of the second PhC fiber 2b. The light emitted from the second PhC fiber 2b is incident on the input end of the second SM fiber 3b. In this second SM fiber 3b, the light is reduced to a waveform 33b with a small MFD, and propagates in the single mode through the second SM fiber 3b.

According to the first embodiment, therefore, the optical fiber component can be optically connected in the single mode at the optical element thereby to reduce the connection loss.

Fig. 3 presents a longitudinal section of a portion of an optical fiber component according to a second embodiment of the invention. From Fig. 3, the portions common to those of Fig. 1 and Fig. 2 are omitted in detailed description by designating them by the common reference numerals.

In Fig. 3, the optical fiber component according to the second embodiment comprises the optical element 1 having the light incident end face 1a on its one side and the light exit end face 1b on its other side. An end face (or output end) of the first PhC fiber 2a is optically connected to the light incident end face 1a of the optical element 1 while being aligned with the optical axis of the optical element 1. An end face (or input end) of the second PhC fiber 2b is optically connected to the light exit end face 1b while being aligned with the optical axis of the optical element 1. Moreover, an end face (or output end) of a first GI fiber 4a is optically connected to the other end face (or input end) of the first PhC fiber 2a while being aligned with the optical axis of the first PhC fiber 2a. An end face (or input end) of a second GI fiber 4b is optically connected to the other end face (or output end) of the second PhC fiber 2b while being aligned with the optical axis of the second PhC fiber 2b. Still moreover, an end face (or output end) of the first SM fiber 3a is optically connected with the other end face (or input end) of the first GI fiber 4a while being aligned with the optical axis of the first GI fiber 4a. One end face (or input end) of the second SM fiber 3b is optically connected to the other end face (or output end) of the second GI fiber 4b while being aligned with the optical axis of the second GI fiber 4b.

Here, the first and second PhC fibers 2a and 2b have an MFD (approximately 30 to 50 µm) larger than the MFD (approximately 10 µm) of the first and second SM fibers 3a and 3b, and the first and second GI fibers 4a and 4b have an MFD gradually enlarged from approximately 10 µm to approximately 30 to 50 µm, respectively, from the first and second SM fibers 3a and 3b to the corresponding first and second PhC fibers 2a and 2b.

In the optical fiber component according to the second embodiment, as shown in Fig. 3(b), the light incident from the input end of the first SM fiber 3a propagates in the waveform 33a with a small MFD through the first SM fiber 3a and is emitted from the output end of the first SM fiber 3a. The light emitted from the first SM fiber 3a is incident on the input end of the first GI fiber 4a, and its waveform 43a is gradually enlarged in the first GI fiber 4a from approximately 10 µm to approximately 30 to 50 µm so that it is incident on the input end of the first PhC fiber 2a. The light propagates through the first PhC fiber 2a in the waveform 23a with the large MFD and in the single mode and is incident on the light incident end face 1a of the optical element 1. Thus, the light passes through the optical element 1 and is emitted from the light exit end face 1b of the optical element 1. The light thus emitted from the light exit end face 1b is incident on the input end of the second PhC fiber 2b. The light propagates through the second PhC fiber 2b in the waveform 23b with the large MFD and in the single mode state and is emitted from the output end of the second PhC fiber 2b. The light emitted from the second PhC fiber 2b is incident on the input end of the second GI fiber 4b. In this second GI fiber 4b, the MFD of a waveform 43b is gradually reduced from approximately 30 to 50 µm to approximately 10 µm. The light with the reduced MFD is incident on the input end of the second SM fiber 3b and propagates through the second SM fiber 3b in the waveform 33b of the small MFD and in the single mode.

According to the second embodiment, too, the optical fiber component can be optically connected to the optical element in the single mode thereby to reduce the connection loss.

Fig. 4 is an explanatory diagram of an optical fiber component according to a third embodiment of the invention. From Fig. 4, the portions common to those of Fig. 3 are omitted in detailed description by designating them by the common reference numerals.

In the optical fiber component according to the third embodiment, an optical isolator 1A is employed as the optical element.

Optical measurements on this embodiment have revealed, for a wavelength of 1,550 nm, that the insertion loss between the first and second SM fibers 3a and 3b was 0.5 dB, and that the isolation was 45 dB.

Fig. 5 is an explanatory diagram of an optical fiber component according to a fourth embodiment of the invention. From Fig. 5, the portions common to those of Fig. 3 are omitted in detailed description by designating them by the common reference numerals.

In the optical fiber component according to the fourth embodiment, an optically variable attenuator 1B is employed as the optical element.

Optical measurements on this embodiment have revealed, for a wavelength of 1, 550 nm, that the drive voltage was 0 to 10 V, and that the variable attenuation was 0.5 to 25 dB.

Fig. 6 is an explanatory diagram of an optical fiber component according to a fifth embodiment of the invention. From Fig. 6, the portions common to those of Fig. 3 are omitted in detailed description by designating them by the common reference numerals.

In the optical fiber component according to the fifth embodiment, an optical switch 1C is employed as the optical element.

Optical measurements on this embodiment have revealed, for a wavelength of 1,550 nm, that the drive voltage was 0, 10 V, and that the variable attenuation was 0.5, 25 dB.

Fig. 7 is an explanatory diagram of an optical fiber component according to a sixth embodiment of the invention. From Fig. 7, the portions common to those of Fig. 4 are omitted in detailed description by designating them by the common reference numerals.

In the optical fiber component according to the sixth embodiment, the first and second SM fibers 3a and 3b shown in Fig. 4 are replaced by first and second SM-NSP (Non-Strippable Primary Coated) fibers 3a' and 3b'. Here, these SM-NSP fibers 3a' and 3b' are the optical fiber cores which are prepared by coating the surface of a clad having an external diameter of 115 µm, for example, with a thin NSP layer (approximately 5 µm, for example) made of an unpeelable polymer resin. After the coating is removed, the NSP layer protects the clad so that the SM-NSP fibers 3a' and 3b' have a high mechanical strength and an NSP diameter of approximately 125 µm thereby to provide performances similar to those of the ordinary SM fibers.

In this embodiment, the first and second SM-NSP fibers 3a' and 3b' , the first and second GI fibers 4a and 4b and the first and second PhC fibers 2a and 2b, which have their individual end faces polished, are arranged in V-grooves, and their end faces are fixed with mechanical splices. Here, matching oil is applied to the individual end faces of those fibers.

Optical measurements on this embodiment have revealed, for a wavelength of 1,550 nm, that the insertion loss between the first and second SM-NSP fibers 3a' and 3b' was 1 dB, and that the isolation was 42 dB.

Fig. 8 is an explanatory diagram of an optical fiber component according to a seventh embodiment of the invention. From Fig. 8, the portions common to those of Fig. 1 to Fig. 3 are omitted in detailed description by designating them by the common reference numerals.

In Fig. 8, the optical fiber component according to the seventh embodiment comprises the first PhC fiber 2a (or the second PhC fiber 2b) with a large MFD (approximately 30 to 50 µm), and the first SM fiber 3a (or the second SM fiber 3b) with a small MFD (approximately 10 µm). These PhC fiber 2a and SM fiber 3a are optically connected like the foregoing embodiments to each other while being aligned with their optical axes.

Here, the external diameter D of the first PhC fiber 2a (or the second PhC fiber 2b) is made substantially equal to the diameter (1.25 mm) of the (not-shown) ferrule mounted on the optical connector such as the (not-shown) FC connector.

In this embodiment, the external diameter D of the first PhC fiber 2a (or the second PhC fiber 2b) is made substantially equal to the diameter of the ferrule of the optical connector so that it can be optically coupled in the connector shape to the optical element 1.

Fig. 9 is an explanatory diagram of an optical fiber component according to an eighth embodiment of the invention. From Fig. 9, the portions common to those of Fig. 1 to Fig. 3 and Fig. 8 are omitted in detailed description by designating them by the common reference numerals.

In Fig. 9, the optical fiber component according to the eighth embodiment comprises the first and second PhC fibers 2a and 2b with a large MFD (approximately 30 to 50 µm), and the first and second SM fibers 3a and 3b with a small MFD (approximately 10 µm). These PhC fibers 2a and 2b and SM fibers 3a and 3b are optically connected like the foregoing embodiments to each other while being aligned with their optical axes.

Here, the external diameter D of the first and second PhC fibers 2a and 2b is made substantially equal, like the optical fiber component of the third embodiment, to the diameter of the ferrule.

In this embodiment, the external diameter D of the first and second PhC fibers 2a and 2b is made substantially equal to the diameter of the ferrule of the optical connector. Therefore, the first PhC fiber 2a and the second PhC fiber 2b can be optically coupled with ease in the connector shape to each other.

Fig. 10 is an explanatory diagram of an optical fiber component according to a ninth embodiment of the invention. From Fig. 10, the portions common to those of Fig. 1 to Fig. 3, Fig. 8 and Fig. 9 are omitted in detailed description by designating them by the common reference numerals.

In Fig. 10, the optical fiber component according to the ninth embodiment comprises the first PhC fiber 2a (or the second PhC fiber 2b) with a large MFD (approximately 30 to 50 µm), and the first SM fiber 3a (or the second SM fiber 3b) with a small MFD (approximately 10 µm) . These PhC fiber 2a and SM fiber 3a are optically connected like the foregoing embodiments to each other while being aligned with their optical axes. Here, the external diameter of the first PhC fiber 2a (or the second PhC fiber 2b) is made substantially equal to the diameter (1.25 mm) of the ferrule as in the optical fiber component according to the third embodiment.

Moreover, a connector housing 5 is attached through a (not-shown) spacer to the outer periphery of one end portion (or leading end portion) of the first PhC fiber 2a (or the second PhC fiber 2b) . The leading end face of the first PhC fiber 2a (or the second PhC fiber 2b) is arranged to slightly protrude from the end face of the connector housing 5.

In this embodiment, the attachment of the connector housing 5 forms the leading end portion of the first PhC fiber 2a (or the second PhC fiber 2b) into a plug shape so that the leading end portion of the first PhC fiber 2a (or the second PhC fiber 2b) can be connected to the (not-shown) adapter.

Here, the foregoing embodiments have been described on the case, in which the MFD of the PhC fibers is set to 30 to 50 µm, but the MFD has to be at least 20 µm. The PhC fiber finds, if less than 20 µm, it difficult to be aligned in the optical axis with the SM fiber (or the GI fiber).

Moreover, the foregoing embodiments have been described on the case, in which the first and second PhC fibers and the first and second SM fibers are optically connected to each other. Despite of the description, however, first and second collimation lenses maybe optically connected between the first and second PhC fibers and the first and second SM fibers.

Still moreover, the foregoing embodiments have been described on the case, in which the external diameter of the first and second PhC fibers is equalized to that of the first and second GI fibers, but the former external diameter and the latter external diameter may be different from each other.

### Industrial Applicability

According to the optical fiber component of the invention, as apparent from the description thus far made, the optical connection to the optical element in the single mode can be performed by using the PhC fibers thereby to reduce the connection loss. According to the PhC fibers, moreover, the size of the MFD can be freely designed to enlarge the core in the single mode and further to perform the optical coupling easily according to the design of the optical element. By enlarging the MFD of the PhC fibers, still moreover, the angle of diffraction of the light to propagate can be decreased to reduce the connection loss at the time when the PhC fibers are coupled to the optical element.

## Claims

1. An optical fiber component comprising: an optical element having a light incident end face on its one side and a light exit end face on its other side; a pair of photonic crystal fibers having their individual one-side end faces optically connected to the two end faces of said optical element; and a pair of single mode fibers having their individual one-side end faces optically connected to the other end faces of said pair of photonic crystal fibers, **characterized:**
**in that** said pair of photonic crystal fibers has a mode field diameter made larger than that of said pair of single mode fibers.

2. An optical fiber component comprising: an optical element having a light incident end face on its one side and a light exit end face on its other side; a pair of photonic crystal fibers having their individual one-side end faces optically connected to the two end faces of said optical element; a pair of collimation lenses having their individual one-side faces optically connected to the other end faces of said pair of photonic crystal fibers; and a pair of single mode fibers having their individual one-side end faces optically connected to the other end faces of said pair of collimation lenses, **characterized:**
**in that** said pair of photonic crystal fibers has a mode field diameter made larger than that of said pair of single mode fibers; and in that said pair of collimation lenses has a mode field diameter gradually enlarged from the single mode fibers to said photonic crystal fibers.

3. An optical fiber component as set forth in claim 1 or 2, **characterized in that** said optical element is made of an optical isolator, an optical filter, an optical switch or an optical variable attenuator, or a combination thereof.

4. An optical fiber component comprising: a single mode fiber; and a photonic crystal fiber having an end face optically connected to an end face of said single mode fiber and having a mode field diameter larger than that of said single mode fiber, **characterized:**
**in that** the external diameter of said photonic crystal fiber is made substantially equal to a ferrule making an optical connector.

5. An optical fiber component comprising: a single mode fiber; a collimation lens having an end face optically connected to an end face of said single mode fiber and having a mode field diameter gradually enlarged; and a photonic crystal fiber having an end face optically connected to the other end face of said collimation lens and having a mode field diameter larger than that of said single mode fiber, **characterized:**
**in that** the external diameter of said photonic crystal fiber is made substantially equal to a ferrule making an optical connector.

6. An optical fiber component as set forth in claim 2 or 5, **characterized in that** said collimation lens is a graded index fiber.

7. An optical fiber component as set forth in claim 6, **characterized in that** said graded index fiber has an end face fused to the end face of said graded index fiber.

8. An optical fiber component as set forth in any claims 4 to 7, **characterized in that** a connector housing is attached to the leading end portion of said photonic crystal fiber.

9. An optical fiber component as set forth in any claims 1 to 8, **characterized in that** said photonic crystal fiber has a mode field diameter of at least 20 µm.
